# EUROPEAN PATENT APPLICATION

(11) **EP 1 630 145 A1**
(43) Date of publication of application: **01.03.2006**
(21) Application number: 04020601.3
(22) Date of filing: 31.08.2004
(51) Int. Cl.: C04B 14/42, C04B 28/02, E01C 11/18, E01C 11/22, C03B 37/16, B02C 21/00

(54) **Milled "AR" glass yarn additive for cement-based matrices, method for producing said additive and cement-based matrices added with said glass yarn**

(71) Applicant: Saint-Gobain Revetex S.r.l., 20045 Besana Brianza (Milano) (IT)
(72) Inventor: Ferrante, Antonio, 20045 Besana Brianza (Milano) (IT)
(74) Representative: Petruzziello, Aldo

(57) **Abstract**

An additive for cement-based matrices, essentially composed of an "AR" (Alkaline-Resistant) glass yarn.

With respect to prior art additives, the AR glass yarn of the invention offers the advantage of being water-repellent, that is, it prevents conventional phenomena of dimensional instability of the applied product. The additive of the invention also has the advantage that it can be milled to sufficiently small dimensions, making it compatible for mixture with aggregates. Glass yarn micro-reinforcements are thereby obtained which, by providing continuity to the structure of applied cement-based matrices, accentuate the mechanical resistance of the product (mortar coatings or cement-based paint).

## Description

The present invention relates to a new milled "AR" glass yarn additive for cement-based matrices. The invention is also extended to the method to produce this additive, and the cement-based matrices added with said glass yarn.

The field of the invention is that of additives to reinforce cement-based matrices, in particular cement-based mortar and cement-based paint fillers.

Cement-based mortars and paints are distinguished by the fact that they comprise a cement base, plus aggregates and synthetic additives, where the cement has a grain size distribution of 0.5-2 mm. In particular, cement-based mortars characterize a high quality product, employed for finishes such as road paving, to prepare special surfaces and the like. On their part, cement-based paints, which combine a colouring agent with the cement-base, are employed to cover and restore cement facings, tunnel interiors and the like.

In these types of application the mortar or paint must be provided with mechanical properties, for example it must be self-supporting, resistant to tearing and resistant to thermal dilation. Moreover, in view of the high instability of the thin base materials, it is important to provide the mortar or paint with the necessary reinforcement, which performs its function already at the time of application.

With the objective of obtaining the desired stability of the mortar and of the paint, reinforcing agents composed of natural fibres (jute and cellulose) and synthetic fibres (polypropylene, polyamides, polyesters and other resins) are currently added.

The main drawback found with natural fibres is represented by the fact that they tend to absorb water. Consequently, during the hardening phase of the mortar or pain these fibres tend to dry out, contracting and thereby forming surface and internal irregularities in the form of corrugations, cracks or cavities, which not only cause detachment and tearing of the material, but also undesirable aesthetic effects.

On their part, synthetic fibres cannot be milled to the grain size dimension required for their addition to the fine powders of which cement-based mortars and paints are composed, as this causes the formation of lumps and conglomerates with dimensions even larger than those of the aggregates. For some applications, the mechanical performances offered by these additives are also insufficient and must be improved.

All the prior art additives mentioned here have the further drawback of having a negative effect on the colour of the product.

The principal object of the invention is to provide a new additive for cement-based mortars and paints which, with respect to prior art additives, offers improved performances in terms of quality of the applied product, essentially eliminating both structural and aesthetic defects.

These and other objects are obtained with the additive, the method and the cement-based matrices claimed in claims 1, 6 and 8 respectively. Some preferred embodiments of the invention are claimed in the remaining claims.

With respect to prior art additives, the AR glass yarn of the invention offers the advantage of being water-repellent, that is, it prevents conventional phenomena of dimensional instability of the applied product.

The additive of the invention also has the advantage that it can be milled to sufficiently small dimensions, making it compatible to be mixed with aggregates. Glass yarn micro-reinforcements are thereby obtained which by providing continuity to the structure of the applied cement-based matrices, accentuate the mechanical resistance of the product (cement-based mortar or paint).

More specifically, the high level of mixability of the additive, both dry and damp, provides the product with noteworthy workability - elasticity, which permits adherence to even the most critical surfaces. The phenomena of detachment and tearing caused by freezing and thawing are thereby eliminated and application of the cement-based matrix even on very extensive surfaces, without the formation of runs, are facilitated (product with high specific surface, intended as surface covered per gram of additive). Moreover, as it is an inert product, the additive of the invention does not cause chemical reactions in contact with the other components of the mixture.

A further advantage is represented by the fact that this additive does not interfere with colour of the product, and in fact increases the colour contrast. In particular, if mixed with grey mortars or paints, it increases the luminescence by about 25%.

The additive of the invention is composed of an AR (Alkaline-Resistant) glass yarn, reduced into microfibres shaped essentially in the form of small needles with a constant diameter of 14µ and a length ranging from 100µ to 200µ.

The initial yarn is covered with binders which perform the function of promoting cohesion between cement and aggregates. The quantity of binders present is distinguished by a coefficient of Content of Organic Substance with a value of 0.70-1.50.

The initial material for the preparation of this yarn is composed of continuous AR glass yarns, initially crushed in a rotary mill. The crushed product is then subjected to dust removal to eliminate unsuitable particles. Dust removal is followed by fractioned milling with blade mill and sifting to obtain the desired dimensions of product.

The whole processing method is performed cold, to prevent undesired polymerization on the binders of the fibres.

The additive thus prepared has the form of an opaque white powder with dimensions ranging from 500 micron to 5 mm and with a humidity content of less than 0.1%. It is mixed to the cement-based matrices (cement-based mortars and paints), preferably milled with a thickness of 0.5-1.5 mm, in a percentage ranging from 2% to 8% with respect to the weight of the cement. Preferably, said mixing is performed dry.

The examples below illustrate the invention, although without limiting it with respect to the scope defined in the appended claims.

### Example 1: cement-based mortars

The following cement-based mortar was prepared with the additive of the invention (the percentages are in weight):

| | |
|---|---|
| Cement | 40% |
| Aggregates | 30% |
| Additive | 5% |
| Water | 25% |

### Example 2: cement-based paints

The following cement-based paint was prepared with the additive of the invention (the percentages are in weight):

| | |
|---|---|
| Cement | 44% |
| Aggregates | 26% |
| Additive | 6% |
| Water | 24% |

Modifications can be made to the invention as described above, to obtain variants which nonetheless come within the scope of the claims hereunder.

## Claims

1. Additive for cement-based matrices comprising a cement base and aggregates, **characterized in that** it is composed of an "AR" (Alkaline-Resistant) glass yarn.

2. Additive as claimed in claim 1, **characterized in that** said yarn is composed of glass microfibres shaped in the form of small needles with a constant diameter of 14µ and a length ranging from 100µ to 200µ.

3. Additive as claimed in claim 1 or 2, **characterized in that** it also comprises binders with a coefficient of Content of Organic Substance of 0.70-1.50.

4. Additive as claimed in one or more of the previous claims, **characterized in that** it is composed of a powder with a humidity content of less than 0.1 % and dimension ranging from 500 micron to 5mm.

5. Additive as claimed in one or more of the previous claims, **characterized in that** said cement-based matrices are composed of cement-based mortars and paints.

6. Procedure for preparing the additive as claimed in one or more of the previous claims, **characterized in that** it includes milling of said AR glass yarns, removal of dust from the crushed product, fractioned milling of the product with the dust removed and final sifting.

7. Method as claimed in claim 6, **characterized in that** it is wholly performed cold.

8. Cement-based matrix, of the type comprising a cement base and aggregates, **characterized in that** it also comprises the additive as claimed in one or more of the previous claims.

9. Cement-based matrix as claimed in claim 8, **characterized in that** it contains from 2% to 8% of said additive with respect to the weight of the cement.

10. Cement-based matrix as claimed in one or more of the previous claims, **characterized in that** it is composed of cement-based mortars and paints in the form of powders with dimensions ranging from 0.5 to 1.5 mm.

11. Cement-based matrix as claimed in one or more of claims 8 to 10, **characterized in that** it is composed of a cement-based mortar with the following composition in weight:
| | |
|---|---|
| Cement | 40% |
| Aggregates | 30% |
| Additive | 5% |
| Water | 25% |

12. Cement-based matrix as claimed in one or more of claims 8 to 10, **characterized in that** it is composed of a cement-based paint with the following composition in weight:
| | |
|---|---|
| Cement | 44% |
| Aggregates | 26% |
| Additive | 6% |
| Water | 24% |
